# EUROPEAN PATENT APPLICATION

(11) **EP 4 610 240 A1**
(43) Date of publication of application: **03.09.2025**
(21) Application number: 24160194.7
(22) Date of filing: 28.02.2024
(51) Int. Cl.: C04B 26/10, C04B 35/573, C04B 35/80, C04B 37/00

(54) **A MILLABLE PASTE FOR USE IN A METHOD FOR OBTAINING CAVITY STRUCTURES IN A CERAMIC COMPONENT, AND A METHOD FOR OBTAINING SAID CAVITY STRUCTURES IN CERAMIC COMPONENTS**

(71) Applicant: CeramTec GmbH, 73207 Plochingen (DE)
(72) Inventor: HETTICH, Pascal, 76137 Karlsruhe (DE); KEIM, Martin, 74369 Löchgau (DE); KORCAK, Milan, 78985 Mohelnice (CZ); STAHL, Moritz, 72622 Nürtingen (DE)
(74) Representative: Maikowski & Ninnemann Patentanwälte Partnerschaft mbB

(57) **Abstract**

The present invention relates to a millable paste for obtaining cavity structures in a ceramic substrate comprising 20-60 wt% of boron nitride, 20-30 wt% of a binding agent, 0-30 wt% of a solvent, 20-40 wt% of a pore-forming agent, wherein the sum of all ingredients always adds up to 100 wt%. The present invention relates further to a method for obtaining said paste, a method for forming said cavity structures in a ceramic component using said paste.

## Description

The present invention refers to a millable paste for obtaining cavity structures in a ceramic component, a method for obtaining said paste, and a method for forming said cavity structure in a ceramic component using said paste.

### Description

Ceramic substrates or components are used in different technical areas, such as electronic industries, automotive industry and in medicinal industry. Due to the requirements in respect to hardness, chemical resistance and heat resistance silicon carbide (SiC) is added to the ceramic substrates. To produce such a ceramic component, for example, a molded body made from a carbon-containing starting material can be subjected to a siliconization process in which the carbon is reacted with externally supplied silicon to form silicon carbide and, where appropriate pore networks, which are present or formed in the molded body, are filled with pure silicon. In the latter case, in which the pores of a molded body are infiltrated with silicon, a molded body of silicon infiltrated silicon carbide (SiSiC) is obtained, which is characterized by the fact that it has practically no residual porosity.

Larger ceramic substrates or components can be obtained by joining two or more smaller compounds or preforms by joining. This can include glueing with polymeric adhesives, such as epoxide adhesives, or soldering with metals or inorganic solders, i.e. glass. A disadvantage of the non-materially bonding described above is a non-sufficient temperature stability, mechanical or chemical stability of the joining seam.

EP 3 599 229 B1 discloses reaction joined ceramic components consisting of two structural elements and having a joining seam made of a material with essentially the same or very similar properties as the material of the ceramic components or pre-bodies to be joined. The material of the joining seam consists of 30 vol% silicon carbide and at least 8 vol% silicon. At least one of the ceramic components to be joined comprises at least one cavity that is at least partially filled with silicon and/ or a silicon alloy. The cavity adjoins the material of the joining seam or the silicon in the cavity adjoins at least partially the material of the joining seam. Thus, the cavities provided in the ceramic components are filled with silicon and can be seen as a type of storage space for silicon that is subsequently used for material-to-material bonding of the ceramic components to the joining seam.

DE 10 2011 007 815 B4 describes a process for obtaining a ceramic compound, wherein two pre-bodies are formed from a carbon composite with a matrix of amorphous and porous carbon, the two pre-bodies are bonded to each other by a bonding surface by providing and hardening a bonding paste containing silicon carbide and a polymer adhesive and subsequent siliconizing of the pre-bodies to a compound.

It is desirable to form patterns in ceramic substrates, for example for use in microelectronic devices.

According to one approach, polymers are used for defining patterns and cavities in ceramic material (US 4,555,285). However, the polymeric materials decompose and volatilizes in the early stages of the sintering cycle. Once the labile polymer no longer exist, the normal sintering forces can result in the collapse of these cavities. Thus, the polymer used for forming the cavity only defines that shape during lamination and not during the critical sintering process where the ceramic can flow and deform.

US 5,798,469 describes one approach for forming such patterns. Here a non-sinterable material, such as alumina, is used to define a configuration, which may include a cavity and to provide a supporting structure that guarantees the shape and size of a cavity. Since this non-sinterable material is non-sinterable at the glass/ceramic sintering temperatures it will form and retain the shape of the glass/ceramic during sintering, yet is easily removed following sintering. The unsintered alumina can be removed with water or ultrasonic agitation since it remains as a packed powder that will flake apart and be suspended in water. The alumina powder is analogous to dried mud that forms a hard cake, but can be redistributed easily and suspended in water by imparting some form of agitation thereto. However, alumina is a rather soft material and not suitable for further processing.

One object of the present invention was therefore to provide a paste that can be used to create cavity structures in ceramic component. The paste should prevent the closing of channels within a component during infiltration with silicon and keep internal structures free of liquid silicon. At the same time, the paste should be suitable for further processing.

This object is solved by providing a paste and a process with the features as described in the claims.

Accordingly, a millable paste for obtaining cavity or hollow structures in a ceramic substrate or component is provided, wherein the paste comprises
- 20-60 wt% of boron nitride,
- 20-30 wt% of a binding agent,
- 0-30 wt% of a solvent
- 20-40 wt% of a pore-forming agent,
wherein the sum of all ingredients always adds up to 100 wt%.

The paste according to the invention is placed in a cavity of a sinterable, ceramic material, such as a green body/coked part. After curing, the paste can be machined into shape by milling/turning. The pore forming agent and the binding agent pyrolyse below the infiltration of temperature of up to 400-600°C. After infiltration, the boron nitride is present as a loose powder and can be removed without residue, e.g. by compressed air, rinsing with water or other liquid media. The technical advantage of this approach is that the paste hardens and can thus be milled and turned.

In an embodiment, the paste comprises 20-50 wt%, preferably 22-40 wt%, more preferably 25-30 wt% of boron nitride.

In another embodiment, the paste comprises 22-28 wt%, preferably 23-25 wt% of a binding agent.

In still another embodiment, the paste comprises 10 - 30 wt %, preferably 20 - 30 wt% of a suitable solvent. A suitable solvent may be a non-polar solvent, such as n-Hexane, a polar aprotic solvent, such as acetone, a polar protic solvent, such as H₂O, isopropanol, ethanol, or a mixture thereof. In a more preferred embodiment, the paste comprises 22-28 wt%, preferably 23-25 wt% of water. The addition of water to the present paste improves the blending or mixing of the paste components.

The pore-forming agent may be present in the paste in an amount of 20-35 wt%, preferably 23-33 wt%, more preferably 25-30 wt%.

In a further embodiment a stabilizer may be added to the paste. Said stabilizer may be added in an amount of 0-5 wt%, preferably 1-4 wt%, more preferably 2-3 wt%. The stabilizer may be a gel forming agent, in particular a cellulose derivative, such as methyl hydroxyl ethyl cellulose (tylose).

The boron nitride used in the paste has a hexagonal structure. Boron nitride is used in the paste in form of platelets with a platelet size with a D₅₀ of 1- 35 µm, preferably 1-20 µm, more preferably 1-10 µm. The BET surface area (determined according to ASTM D 3663) may be between 1 and 20 m²/g, preferably between 2 and 10 m²/g, more preferably between 3 and 8 m²/g, even more preferably between 4 and 7 m²/g.

In the present case, Boron nitride is used as filling agent, in particular as SiC filling agent. Even though boron nitride as thermally conducted material has been widely used as filler material in thermally conductive grease or waxes in heat generating devices, in particular in microelectronic devices, the use of a boron nitride containing paste for obtaining cavity structures in a ceramic material has not been suggested. For example, WO 03/013845 A1 describes a paste comprising hexagonal boron nitride that is used as a powder in a polymer blend. This thermally conductive material is used for connecting a heat source to a heat sink in an electronic device. WO 2005/037726 A2 also refers to a BN paste as non-infiltratable material.

The binding agent may be provided as such, i.e. non-diluted or non-dissolved, as a solid or liquid. The binding agent may also be provided as an aqueous mixture, in particular in a weight or mass ratio of binding agent to water between 2:1 and 1:2, in particular 1:1, i.e. same amounts of binding agent and water.

A suitable binding agent may be selected from polyethylene glycols. For example, a high melting PEG that is solid at room temperature may be used. The use of a binding agent, such as PEG, improves the strength and millability / grindability of the paste. PEG may also be used as an aqueous PEG emulsion. For example, an aqueous PEG emulsion used in the paste comprises PEG 200-10.000. The mass ratio of PEG and H₂O may be between 30:70 and 70:30, preferably 50 : 50.

Other suitable binding agents may used. For example, SBR (styrene-butadiene rubber or styrene-butadiene copolymer) or cellulose derivatives such as modified methyl hydroxyethyl cellulose powder, in particular etherified hydroxyethyl cellulose powder. Both of SBR and cellulose are preferably used as suspensions or solutions. In such a case the total amount of binding agent in the paset may be less than 20 et%, such as 10-20 wt%.

The pore-forming agent used in the present paste is made of a material that pyrolyses at or below the sintering temperature of the ceramic material containing the cavity structure filled the paste. Thus, the pore-forming agent is preferably an organic material. In a preferred embodiment the pore forming agent is one of the following: polymer beads or cellulose.

The polymer beads used may be polyacrylate (PMM) beads. The d50 diameter of the PMM beads may be between 10 and 200 µm, preferably between 20 and 150 µm, more preferably between 30 and 100 µm, even more preferably between 40 and 80 µm, such as between 40 and 50 µm.

As mentioned, the pore-forming agent may be also cellulose, in particular in form of cellulose fibers or balls / spheres. The cellulose fibers may have a length up to 200 µm. In an embodiment the cellulose fibers may have a length between 10 and 200 µm, preferably between 20 and 150 µm, more preferably between 30 and 100 µm, even more preferably between 40 and 80 µm, such as between 40 and 50 µm. The diameter d50 of the cellulose fiber may be upto 200 µm, preferably upto 150 µm, such as between 10 and 200 µm, preferably between 20 and 150 µm.

It is also possible to use a mixture of polymer beads and cellulose fibers. In this case the mass ratio of polymer beads and cellulose fibers may be between 2:1 and 1:2, preferably 1:1.

In an embodiment, the millable paste comprises
- 20-50 wt% of boron nitride,
- 20-30 wt% of a binding agent,
- 20-30 wt% of a solvent
- 20-35 wt% of a pore-forming agent,
wherein the sum of all ingredients always adds up to 100 wt%.

In still another embodiment, the millable paste comprises
- 25-40 wt% of boron nitride,
- 20-30 wt% of a binding agent,
- 20-30 wt% of a solvent
- 25-30 wt% of a pore-forming agent,
wherein the sum of all ingredients always adds up to 100 wt%.

The drying loss of the boron nitride paste (determined according to DIN 51078, DIN EN 51078) is 22-24 % (when using a paste with PEG/H2O in a ratio of 50:50, drying parameter 105°C, shutdown criterion 1mg/50s). Loss of ignition may be determined according to DIN 51081, ISO 806.

In a preferred embodiment, the paste comprises
- 20-50 wt% of boron nitride,
- 40-60 wt% of an aqueous polyethylene glycol (PEG) emulsion
- 20-35 wt% of a pore-forming agent,
wherein the sum of all ingredients always adds up to 100 wt%.

In a still further preferred embodiment, the paste comprises
- 25-40 wt% of boron nitride
- 45-55 wt% of an aqueous PEG emulsion, and
- 25-30 wt% of a pore-forming agent.
wherein the sum of all ingredients always adds up to 100 wt%.

The present paste is obtained in a method comprising:
- providing 20-50 wt% of boron nitride, 20-30 wt% of a binding agent, 0-30 wt% of a solvent, such as H₂O, 20-40 wt% of a pore-forming agent, and
- mixing the ingredients until a smooth paste is obtained.

In an embodiment of the paste synthesis method, powder of boron nitride, aqueous binding agent and powder of pore-forming agent are added step-wise one after the other. The compounds of the paste are mixed thoroughly at room temperature. The rotation speed of the mixing device is up to 1000 rpm. In the course of the mixing process, air is injected or inserted into the mixture.

It is to be understood that the composition of the paste as described above also applies to the method for obtaining the same.

As mentioned previously, the present paste is used for obtaining hollow or cavity structures in a ceramic component that may be used in electronic devices, for examples in wafer chucks. The hollow structures or structural elements can be channels or hollow spaces that may be filled with a liquid for use in heat exchanging systems or cooling systems.

Thus, also a suitable method of forming a cavity structure in a ceramic component, in particular in a SiSiC ceramic component, is provided, wherein the ceramic component is obtained by joining at least two SiC preforms, the method comprising the following steps:
- Providing at least two SiC ceramic preforms, such as green parts or coked parts, each having at least one joining surface, wherein at least one of the SiC ceramic preforms is provided with cavity structures;
- Filling the cavity structures of the at least one SiC ceramic preform with a millable paste as described above,
- Hardening / curing the paste and optional milling of the paste;
- providing a joining slurry comprising a binding agent, silicon carbide particles, carbon on the joining surface of at least one of the at least two SiC preforms,
- pressing the joining surfaces of the at least two SiC preforms together,
- drying the at least two SiC preforms, and
- heating up the at least two SiC preforms between 1500 and 2000 °C, whereby Si is infiltrated into the SiC preforms including the dried joining slurry to obtain the materially bonded silicon- silicon carbide (SiSiC) ceramic component,
   and
- subsequently removing the powdered paste from the cavity structures of the SiSiC ceramic component for obtaining a ceramic structure with open and unfilled cavities.

The present method allows for providing a ceramic component or substrate with cavity structures such as channels and coils and avoids the more difficult introduction of channels and coils into ceramic material in a hardened state or condition.

Furthermore, the present method allows joining of at least two SiC preforms for providing a SiSiC ceramic component. A joining slurry is applied to the parts to be joined. This is characterized by an appropriate working time and consistency. The joining slurry comprises or consists of the following components: SiC particles, carbon black, another carbon source such as a polymer, and a solvent. To reduce the formation of pores, a centrifugal mixing device is used for mixing the slurry ingredients.

As mentioned above, at least one of said SiC ceramic preforms is provided with cavity structures such as channels. It is also possible that cavity structures are introduced into both SiC ceramic preforms that will subsequently be joined to one SiSiC ceramic component. The cavity structure may be introduced by milling.

It is also conceivable that a cavity is created by assembling two or more ceramic compounds, wherein the cavity is not introduced by milling.

The cavity structures may be introduced into the surface of at the at least one SiC ceramic preforms by milling or turning.

In a next step the boron nitride paste as described in detail above is placed in the cavity structure of the at least one or two SiC ceramic preforms such as a green body/coked part. The viscosity of the boron nitride paste is adjusted such that the paste can easily be filled into the cavity structures of the ceramic compound(s).

Subsequently, the paste is hardened within the cavity structure. Hardening or curing of the paste is done at temperatures between 40 and 150°C, preferably between 50 and 100°C, more preferably between 50 and 80°C.

It is also possible that the hardening step is carried out in an air-conditioning unit or air-conditioning cabinet. The humidity in such an air-conditioning unit is between 45 and 90%, preferably between 55 and 85 %. Drying the compressed compounds in an air-conditioning unit reduces the likelihood of drying cracks or drying tears.

After curing, the paste can be machined into shape by milling/turning. The joining surface is subsequently cleaned of any boron nitride; i.e. no boron nitride should be present on the joining surface(s) of the two ceramic compounds to be joined.

In a next step, a joining slurry is placed on the joining surface of at least one of the at least wo ceramic preforms to be joined to the larger component. The joining slurry promotes a material-to-material bonding of the two ceramic preforms.

The joining slurry comprises at least one binding agent, silicon carbide particles and carbon black with a total solids content of 60-95 wt%, preferably 65-86 wt%, more preferably of 70-80 wt% (in respect to the total composition of the slurry). The viscosity of the joining slurry according to the present invention can be adapted by adding at least one solvent.

The joining slurry comprises in one embodiment:
- 40-80 wt%, preferably 50-70 wt% of a binding agent,
- 10-50 wt%, preferably 15-45 wt%, more preferably 15-30 wt% of silicon carbide particles,
- 10-30 wt%, preferably 12-20wt%, more preferably 13-18wt% of carbon black,
- wherein in a preferred embodiment the sum of all ingredients always adds up to 100 wt%.

In a preferred embodiment, the joining slurry comprises:
- 40-80 wt%, preferably 50-70 wt% of a binding agent,
- 10-50 wt%, preferably 15-45 wt%, more preferably 15-30 wt% of silicon carbide particles with a particle size D₅₀ of 1-20 µm, preferably D₅₀ of 1-18 µm, more preferably D₅₀ of 2-17 µm,
- 10- 30 wt%, preferably 12-20 wt%, more preferably 13-18 wt% of carbon black,
- wherein in a preferred embodiment the sum of all ingredients always adds up to 100 wt%.

In another preferred embodiment, the joining slurry comprises:
- 40-80 wt%, preferably 50-70 wt% of a binding agent,
- 2-20 wt%, preferably 5-18 wt%, more preferably 8-15 wt% of silicon carbide particles with a particle size D₅₀ of 10-20 µm, preferably D₅₀ of 11-18 µm, more preferably D₅₀ of 12-17 µm,
- 8-25 wt%, preferably 9-20 wt%, more preferably 10-15 wt% of silicon carbide particles with a particle size D₅₀ of 1-10 µm, preferably D₅₀ of 2-8 µm, more preferably D₅₀ of 2-5 µm,
- 10- 30 wt%, preferably 12-20 wt%, more preferably 13-18 wt% of carbon black,
- wherein in a preferred embodiment the sum of all ingredients always adds up to 100 wt%.

In a more preferred embodiment, the joining slurry comprises:
- 50-70 wt% of a binding agent,
- 5-18 wt% of silicon carbide particles with a particle size D₅₀ of 10-20 µm, preferably D₅₀ of 11-18 µm, more preferably D₅₀ of 12-17 µm,
- 9-20 wt% of silicon carbide particles with a particle size D₅₀ of 1-10 µm, preferably D₅₀ of 2-8 µm, more preferably D₅₀ of 2-5 µm,
- 12-20 wt% of carbon black,
- wherein in a preferred embodiment the sum of all ingredients always adds up to 100 wt%.

In a most preferred embodiment, the joining slurry comprises:
- 50-70 wt% of a binding agent,
- 8-15 wt% of silicon carbide particles with a particle size D₅₀ of 10-20 µm, preferably D₅₀ of 11-18 µm, more preferably D₅₀ of 12-17 µm,
- 10-15 wt% of silicon carbide particles with a particle size D₅₀ of 1-10 µm, preferably D₅₀ of 2-8 µm, more preferably D₅₀ of 2-5 µm,
- 13-18 wt% of carbon black,
- wherein in a preferred embodiment the sum of all ingredients always adds up to 100 wt%.

It is to be noted that the particle size of the silicon carbide particle is adapted to the ceramic material of the ceramic preforms to be bonded and the silicon carbide particles are preferably provided in a bimodular distribution.

The binding agent used in the joining slurry is preferably an organic material that cokes or pyrolysis at or below the infiltration temperature of the ceramic material; i.e. the organic material is converted to carbon during the coking process. The binding agent may be liquid starch or sugar, but also a coking liquid polymer or resin containing glues may be applicable. Typical examples are phenolic resins or novolak. The binding agent may be added as a solution or suspension, preferably as an aqueous solution or suspension,

In an embodiment the joining slurry may also comprise or contain a solvent, preferably water, or a mixture of at least two solvents, for adjusting viscosity of the slurry. In most cases, water is added to the slurry preferably together with the binding agent as a solutionor suspension. The amount of solvent, in particular water, in the joining slurry may be up to 20wt%, such as 2-20 wt%.

The components of the joining slurry are mixed using the following mixing parameters: 80 sec at 400 rpm, 100 sec at 600 RPM, 120 sec at 800 rpm. This program is repeated 6-8 times. The mixing process is carried out under atmospheric pressure or in vacuum.

The drying loss of the joining slurry (determined according to DIN 51078, DIN EN 51078) is between 5-70 wt%, preferred 6-60 wt%, more preferred 8-50 wt% (drying parameter: drying temperature 105°C, shutdown criterion less than 1mg weight loss in 120s). Loss of ignition as determined according to DIN 51081, ISO 806 at 1000°C in oxygen: 40-80 wt%, preferred 50-75 wt%, more preferred 60-75 wt.%.

The joining slurry is provided on one or both of the joining surfaces of the two ceramic preforms to be joined by spatula, screen printing, spraying or any other suitable method. The joining slurry is only placed onto those areas of the joining surface that are supposed to be bonded after infiltration with Si. On the surfaces of cavities with and without filler material no joining slurry is provided; i.e. the joining slurry will only fill those spaces of the joining surfaces that are free of boron nitride paste.

It is to be understood that the joining slurry can be heated up to a temperature of 150°C, such as between RT - 150°C, preferably 40-100°C, more preferably 50-90°C. The heating or tempering of the joining slurry reduces the viscosity of the slurry and facilitates the application of the slurry on the ceramic component surface. The drying is applied for at least up to 6 hours, preferably more than 6 hours.

The joining slurry is placed on the joining surfaces in such an amount that the slurry layer has a thickness of up to 200 µm, preferably up to 100 µm, such as 10-200 µm, preferably 30-150 µm, more preferably 50-100 µm.

By using the joining slurry as described, SiSiC is formed in the joining seam instead of a pure Si layer. Thus, the joining seam bonding the at least two SiC preforms is preferably almost chemically identical to the surrounding material of the bulk material of the obtained SiSiC component. However, there may be a different amount of silicon.

The joining seam may comprise upto 50 vol% silicon, preferably up to 30 vol%, such as 8-30 vol%, while the amount of silicon in the ceramic compound surrounding the joining seam is not more than 15 vol%, preferably 2-14 vol%.

In an embodiment the material of the joining seam comprises at least 50 vol% silicon carbide and at least 8 vol% silicon, advantageously of 50 to 92 vol% silicon carbide and 8 to 50 vol% silicon, even more advantageously of 70 to 92 vol% silicon carbide and 8 to 30 vol% silicon, wherein the sum of all phases always adds up to 100 vol%.

The silicon content in the joining seam is determined by image analysis. Accordingly, the area of the joining seam to be analysed is marked in a first step. Subsequently, the silicon is marked by means of a grey value range. A software (Stream from Olympus) determines the portion or percentage of pixels in the marked area which corresponds to the silicon content in the analysed area.

The thickness of the joining seam is similar to the thickness of the joining slurry layer and is up to 200 µm, preferably up to 100 µm, such as 10-200 µm, preferably 30-150 µm, more preferably 50-100 µm.

After providing the joining slurry on the surface to be bonded said joining surfaces of the at least two SiC preforms are placed on top of each other so that the joining surfaces are in contact with each other. The joining surfaces of the at least two SiC preforms are compressed or pressed together at a pressure of at least 0.3 MPa (3 bar), preferably of at least 0.5 MPa (5 bar) for at least 3 hours, preferably for at least 5 hours.

In a subsequent step, the at least two ceramic SiC preforms and the joining slurry are dried at temperatures between 20°C (preferably room temperature)and 150°C, preferably between 40 and 100°C, more preferably between 50 and 90°C. The drying is sufficient when the surface of the joining slurry shows no adhesion tendency.

Thus, the present method allows for providing a SiSiC ceramic component
- wherein at least two SiC ceramic preforms joined together by materially bonding,
- wherein at least one of the SiSiC ceramic preforms is provided with cavity structures, and
- wherein the at least two SiC preforms are infiltrated with Si including the dried joining slurry.

Using the present joining slurry SiSiC is formed in the joining seam instead of Si layers and a material-to-material bond is formed. In case of SiSiC materials, the SiC particles which are present before the Si infiltration are called primary SiC, SiC grains formed during infiltration from a reaction of carbon located in the preform or joining slurry with the infiltrating liquidous Si is called secondary SiC. The joining seam of the joint SiSiC component comprises primary SiC out of the joining slurry. Additionally secondary SiC is formed from the carbon source of the joining slurry and the liquid Si from the infiltration step and a joining seam with the same phases as the SiSiC surrounding is formed. The bounded material shows the advantageous feature of material properties comparable to the bulk material. From this the mechanical, thermal, electrical and chemical material performance is influenced. A joined material shows a mechanical strength of at least 65 %, preferred at least 75 %, more preferred at least 80 % and most preferred at least 85 % of the mechanical strength of the bulk material. In a joint component containing Si only in the joining seem, less than 50 % of the mechanical strength can be obtained. If a glue, most likely an organic glue is used for joining, carbon from the glue can react to secondary SiC on the interface between SiC preform and the joining seem. The joining seem still consists mainly of Si as the secondary SiC formed with the carbon sourced from the glue is decreasing with the distance from the interface with the SiC preforms to the middle of the joining seem. Therefore, less than 60 % of the mechanical strength of the bulk material can be obtained when using a glue for joining of the at least two SiC preforms.

Furthermore, during infiltration the pore-forming agent of the boron nitride paste is converted to carbon what can easily removed together with the boron nitride e.g. by compressed air, out of the cavity structures of the now materially bonded ceramic component creating an internal cavity. The use of the boron nitride paste with the pore-forming agent also avoids the formation of Si beads or pearls and Si depositions in the cavities during sintering / infiltrating when producing SiSiC substrates.

In contrast, if no joining slurry and no boron nitride paste is used, the hollow structures in a ceramic component will be almost completely filled with silicon. Besides, no material-to-material bonding of the ceramic compounds is provided.

Thus, when joining the at least two SiC ceramic preforms to a SiSiC ceramic component, wherein at least one of the SiC ceramic preforms comprises cavity structures at the joining surface, the cavity structures will be embedded in the final SiSiC ceramic component.

Therefore, the present method allows for providing a SiSiC ceramic component with cavity structures with channels and coils that cannot be introduced into ceramic material in a hardened state or condition.

In particular, the ceramic component obtained by the above described method is characterized by hollow structures or cavities with diameters in a range between 0,5 and 5 mm, preferably between 1 and 4 mm, more preferably between 2 and 3 mm. The cavities may, for example, be in the form of circumferential grooves or single or multiple recesses, such as blind holes, and there may be, for example, round, rectangular, square, semicircular or irregular crosssections of the cavities.

A liquid may be filled into the hollow structures through an opening on the surface of the ceramic component. Such ceramic components can be used i.e. in wafer handling systems (i.e. wafer tables), sensors, cooling systems, heat exchangers, collectors, sensor frames.

The ceramic component obtained by the above-described method reaches a bending strength of at least 65 %, preferred at least 75 %, more preferred at least 80 % and most preferred at least 85 % of the mechanical strength of the monolithic ceramic bulk material; i.e. ceramic material without joining seam. The bending strength was determined according to DIN843-1, 843-5 ISO14704, ASTM C1161 -13 using a 4 point measurement, using bending bars made of two vertically in the middle joined bars.

The invention is now explained in more detail with reference to the examples and figures. It shows
- Figure 1: a section of a coked component filled with boron nitride paste.
- Figure 2: a final ceramic component obtained in an embodiment according to the invention; and
- Figure 3: a ceramic component obtained by joining two SiC ceramic preforms without joining slurry and BN paste; and
- Figure 4: a microscopic view of a joining seam in a final SiSiC ceramic component according to the invention.

### Example 1: Boron nitride paste according to a first embodiment

A boron nitride (BN) paste with the following composition is provided:
Boron nitride: 20 - 50 m%; Water and polyethylene glycol (PEG 200-10000s): 40 - 60 m%. Pore forming agent: polymer beads or cellulose: 20 - 35 m%, wherein the sum of all ingredients always adds up to 100 wt%.

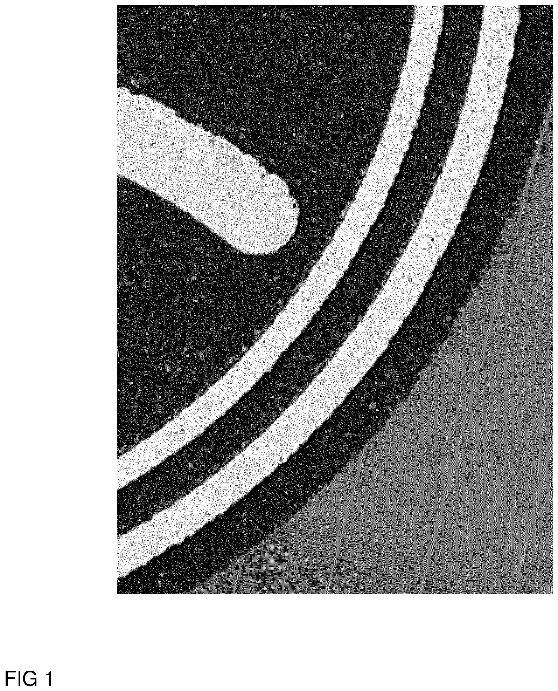

The BN paste is placed in a cavity of a green body/coked part (see Figure 1). The paste hardens and can thus be milled. In addition, it is not removed by compressed air in this machining step.

### Example 2: Boron nitride paste according to a second embodiment

Boron nitride: 50 m%; 50wt% aqueous SBR suspension; 45 m%, water: 5 m%, wherein the sum of all ingredients always adds up to 100 wt%.

The BN paste is placed in a cavity of a green body/coked part. After hardening of the paste said paste can be milled.

### Example 3: Forming hollow structures in a ceramic component

Structures, e.g. channels, are inserted into a coked compound and then filled with the boron nitride paste of Example 1. After filling, drying takes place at 50-90°C for >2 hours. The BN paste hardens and becomes millable/turnable for creating a flat joining surface. The BN paste is selected such that it does not fall out of the compound.

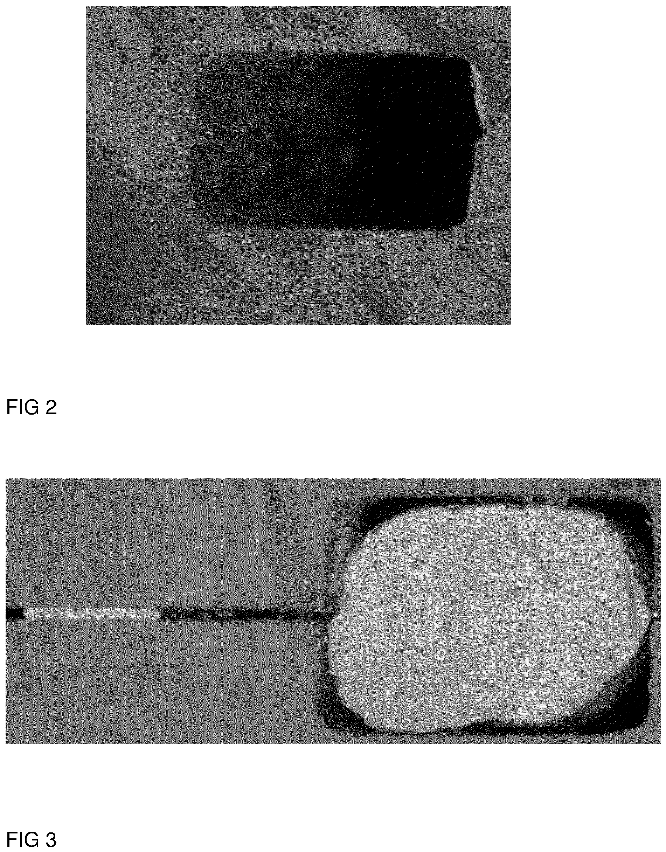

When removing the now powdery BN from the materially bonded component, e.g. by compressed air or water, the desired cavities within the final ceramic component are exposed (see channel in Figure 2). Only slight adhesions of Si can remain. For an improved surface of the ceramic component, a flow grinding process can be carried out.

The use of a millable BN paste with a pore forming agent prevents the formation of larger Si beads and Si adhesions in internal cavities during infiltration during the production of SiSiC components.

### Example 4

For joining two SiC preforms a joining slurry is used, which comprises SiC particles, carbon black and another carbon source such as a polymer. The following is an example of the join slurry composition: Starch solution: 55wt%, SiC powder with FEPA grit size F500: 14 wt%, SiC powder with FEPA grit size F1200: 10 wt%, Carbon black / Graphite: 14 wt%. This joining slurry is applied by screen printing or other processes.

### Example 5

The following is another example of the joining slurry composition: Starch solution: 62 wt%, SiC powder with FEPA grit size F500: 10wt%, SiC powder with FEPA grit size F1200: 10wt%, Carbon black/ Graphite 10 wt%, water 8 wt%. This joining slurry is applied by screen printing or other processes on the joining surface area of at least one of the SiC preforms.

### Example 6

The following is another example of the joining slurry composition: Starch solution: 50 wt%, SiC powder with FEPA grit size: 12wt%, SiC powder with FEPA grit size F1200: 16wt%, Carbon black / Graphite : 17 wt%, water 5 wt%. This joining slurry is applied by screen printing or other processes on the joining surface area of at least one of the SiC preforms.

The two SiC preforms are then pressed together for >5 hours at over 5 bar, and subsequently dried at 50-90°C for >6 hours. This joining and drying process provides a porous SiC component which can be infiltrated with liquid Si to fill the pores of the ceramic material and form a SiSiC component.

By using a joining slurry, during the infiltration step SiSiC is formed in the joining seam instead of a pure Si layer. A material bond is created.

In contrast, when joining two ceramic SiC preforms without joining slurry, the joining seams can fill up completely with Si, and a materially bonded connection is not provided, as can best be seen in Figure 3.

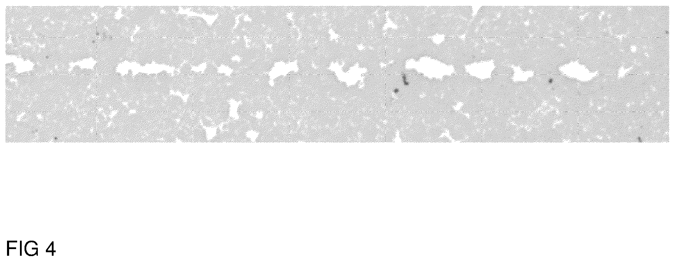

The microscopic picture of Figure 4 shows the joining seam after Si infiltration bonding of two SiC prefoms using the method of the invention. The brighter areas reflect the areas of silicone (Si) within the joining seam. As apparent, the areas with more silicone are mostly aligned along the joining seam, and are partially interrupted by darker areas without almost no silicone. In the sample illustrated in Figure 3, the joining seam comprises 8-30 vol% silicone, while the amount of silicon in the ceramic compound surrounding the joining seam is only 2-20 vol%.

## Claims

1. A millable paste for obtaining cavity structures in a ceramic substrate comprising
- 20-60 wt% of boron nitride,
- 20-30 wt% of a binding agent,
- 0-30 wt% solvent
- 20-40 wt% of a pore-forming agent,
wherein the sum of all ingredients always adds up to 100 wt%.

2. Paste according to claim 1, **characterized by** 20-50 wt%, preferably 22-40 wt%, more preferably 25-38 wt% of boron nitride.

3. Paste according to one of the preceding claims, **characterized by** 22-28 wt%, preferably 23-25 wt% of the binding agent.

4. Paste according to one of the preceding claims, **characterized by** 10 - 30 wt %, preferably 20 - 30 wt% of a solvent.

5. Paste according to one of the preceding claims, **characterized in that** the solvent is a non-polar solvent, such as n-Hexane, a polar aprotic solvent, such as acetone, a polar protic solvent, such as H2O, isopropanol, ethanol, or a mixture thereof.

6. Paste according to one of the preceding claims, **characterized by** 22-28 wt%, preferably 23-25 wt% of water as solvent.

7. Paste according to one of the preceding claims, **characterized by** 23-33 wt%, preferably 25-30 wt% of the pore forming agent.

8. Paste according to one of the preceding claims, **characterized by**
- 20-50 wt% of boron nitride,
- 20-30 wt% of a binding agent,
- 20-30 wt% of a solvent
- 20-35 wt% of a pore-forming agent,
wherein the sum of all ingredients always adds up to 100 wt%.

9. Paste according to one of the preceding claims, **characterized by**
- 25-40 wt% of boron nitride,
- 20-30 wt% of a binding agent,
- 20-30 wt% of a solvent
- 25-30 wt% of a pore-forming agent,
wherein the sum of all ingredients always adds up to 100 wt%.

10. Paste according to one of the preceding claims, **characterized by**
- 25-40 wt% of boron nitride, and
- 45-55 wt% of an aqueous PEG emulsion, and
- 25-30 wt% of a pore-forming agent.
wherein the sum of all ingredients always adds up to 100 wt%.

11. Paste according to one of the preceding claims, **characterized in that** the aqueous PEG emulsion comprises PEG 200-10.000.

12. Paste according to one of the preceding claims, **characterized in that** the pore-forming agent is one of the following: polymer beads or cellulose.

13. A method for making the paste according to one of the preceding claims comprising:
- providing 20-50 wt% of boron nitride, 20-30 wt% of a binding agent, 0-30 wt% solvent, 20-40 wt% of a pore-forming agent, and
- mixing the ingredients until a smooth paste is obtained.

14. Use of a millable paste according to one of the claims 1-8 for obtaining cavity structures in a ceramic substrate.

15. Method of forming a cavity structure in a ceramic substrate comprising:
- providing at least two SiC ceramic preforms each having at least one joining surface, wherein at least one of the SiC ceramic preforms is provided with cavity structures;
- filling the cavity structures of the at least one SiC ceramic preform with a millable paste according to one of the claims 1-8,
- hardening the paste and optional milling of the paste;
- providing a joining slurry comprising a binding agent, silicon carbide particles, carbon on the joining surfaces of at least one of the at least two SiC ceramic preforms,
- pressing the joining surfaces of the at least two SiC ceramic preforms together,
- drying the at least two SiC preforms, and
- heating up the at least two SiC preforms, whereby Si is infiltrated into the SiC preforms including the dried joining slurry to obtain the materially bonded silicon- silicon carbide (SiSiC) ceramic component, and
- subsequently removing the powdered paste from the cavity structures of ceramic component for obtaining a ceramic structure with open and unfilled cavities.
